# EUROPEAN PATENT APPLICATION

(11) **EP 2 480 015 A1**
(43) Date of publication of application: **25.07.2012**
(21) Application number: 10816645.5
(22) Date of filing: 11.08.2010
(51) Int. Cl.: H04W 4/24, H04W 80/04, H04W 88/16

(54) **METHOD, APPARATUS AND SYSTEM FOR POLICY AND CHARGING CONTROL**

(30) Priority: 16.09.2009 CN 200910190305
(71) Applicant: ZTE Corporation, Shenzhen, Guangdong 518057 (CN)
(72) Inventor: ZHU, Yibin, Guangdong 518057 (CN); CHEN, Xuefeng, Guangdong 518057 (CN); CHEN, Yilei, Guangdong 518057 (CN)
(74) Representative: Modiano, Micaela Nadia
(86) International application number: PCT/CN2010/075907
(87) International publication number: WO 2011/032441

(57) **Abstract**

Disclosed are a method, apparatus and system for policy and charging control. The method comprises: A) a packet data network gateway summarizing service data according to service type and configuring a corresponding service code for the summarized service type; B) the packet data network gateway acquiring a policy and charging control rule according to the service code; and C) the packet data network gateway installing and carrying out the policy and charging control rule on the service data. The method meets the practical requirements of more highly efficient interaction service flow.

## Description

### Field of the Invention

The present invention belongs to the technical field of communication, and in particular relates to a method, apparatus and system for policy and charging control.

### Background of the Invention

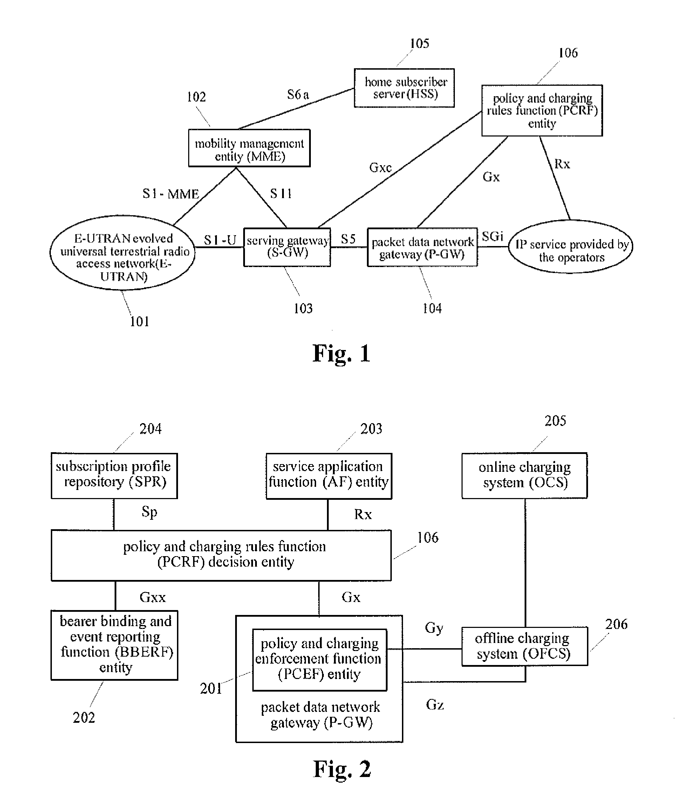

Referring to Fig. 1, Fig. 1 is a schematic diagram of the architecture of an evolved packet system (EPS). The 3rd Generation Partnership Project (3GPP) EPS is consisted of an evolved universal terrestrial radio access network (E-UTRAN) **101**, a mobility management entity (MME) **102,** a serving gateway (S-GW) **103**, a packet data network gateway (P-GW or PDN GW) **104**, a home subscriber server (HSS) **105**, a 3GPP authorization authentication and accounting (AAA) server, a policy and charging rules function entity (PCRF) **106** and other support nodes.

Policy and charging control (PCC) is a part of the EPS.

Referring to Fig. 2, Fig. 2 is a schematic diagram of the architecture of a PCC system. The PCC function entities in the EPS architecture can be distributed as follows: a policy and charging enforcement function (PCEF) entity **201** exists in P-GW **104**, a bearer binding and event reporting function (BBERF) entity **202** can exist in S-GW **103**, a service application function (AF) entity **203** exists in the operator Internet Protocol (IP) service network, and a subscription profile repository (SPR) **204** can be integrated with HSS **105**.

In 3GPP, the corresponding PDN network can be found via the access point name (APN). The connection from user equipment (UE) to PDN network is generally referred to as an IP connectivity access network (IP-CAN) session.

**PCC** is suitable for all the IP-CAN sessions of 3GPP. PCRF **106** is mainly responsible for instituting the policy and charging rule and sends the instituted PCC policy and charging rule to PCEF **201** via a Gx interface, and PCEF **201** installs and carries out the PCC policy and reports relevant events to interact charging information with the charging system. PCRF **106** sends the quality of service (QoS) rule to BBERF **202** via a Gxx interface. BBERF **202** does not interact with the charging system about charging information and is only responsible for bearer binding and the report of relevant events. AF **203** provides service information for PCRF **201** via an Rx interface, SPR **204** stores the service information of subscription, and PCRF **106** can inquire the service information of subscription from SPR **204** via a Sp interface. PCEF **201** sends the online charging information to an online charging system (OCS) **205** via a Gy interface to carry out the statistics of online charging and sends the offline charging information to an offline charging system (OFCS) **206** via a Gz interface.

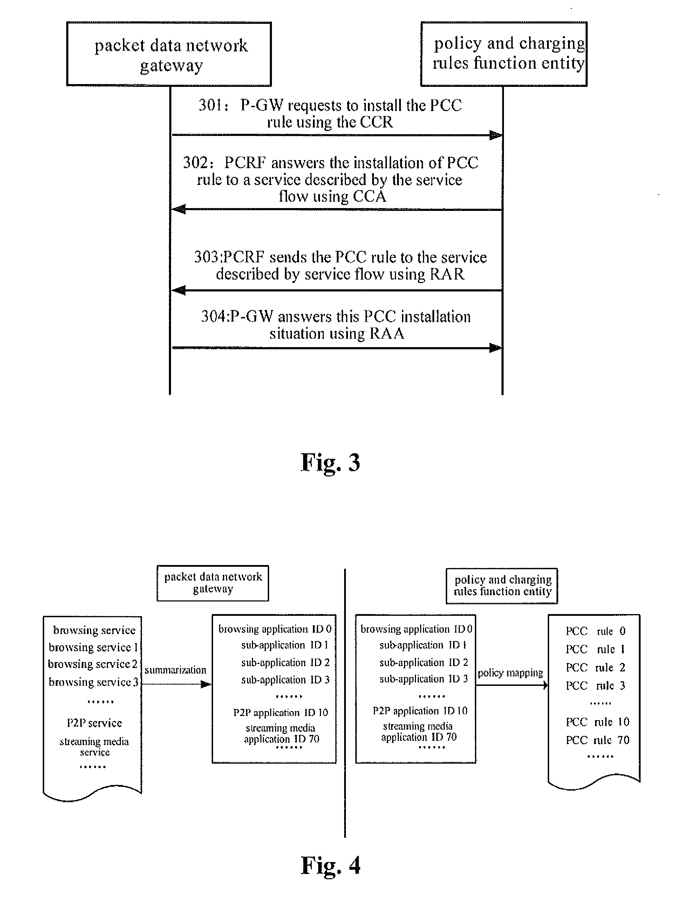

Referring to Fig. 3, Fig. 3 is a flow chart of a currently available PCC system interface message. Currently, PCRF **106** and PCEF **201** use a Diameter message of the Gx interface as a bearer, and the Diameter protocol competes the interaction in the form of attribute value pair (AVP, use the form of Attribute-Length-Value tripe). 3GPP current standards recommend four messages: channel control request command (CC-Request (CCR) Command), channel control answer command (CC-Answer (CCA) Command), re-authentication request command (Re-Auth-Request (RAR) Command) and re-authentication answer command (Re-Auth-Answer (RAA) Command). In this case, CCR/CCA is used for a message procedure initiated from GW, and RAR/RAA is used for a message procedure initiated from PCRF. CCA and RAR messages will carry the PCC rule that PCRF gives to PCEF to install for the application service flow. Specifically, which application service flow is in the two messages is defined by Diameter Application AVP Flow-Description. This AVP defines that the application service flow uses the format of IPFilterRule, and the application service flow is described by the 3^{rd} and 4^{th} layer parameters of IP protocol stacks of the IP protocol such as source address, source port, destination address, destination port, transport layer protocol, etc. It in particular comprises the steps of:
Step 301: P-GW requests to install the PCC rule using the CCR command;
Step 302: PCRF answers the installation of PCC rule to a service described by Flow-Description using CCA;
Step 303: PCRF sends the PCC rule to the service described by Flow-Description using RAR; and
Step 304: P-GW answers this PCC installation situation using RAA.

During the research of related art and practice, the inventors have found that: in the current 3GPP definition, the summarization of user service by the packet data network gateway can only be divided to the 3^{rd} and 4^{th} layers of IP protocol stack, which cannot meet the practical requirements of highly efficient interaction service flow.

### Summary of the Invention

The problem to be solved by the present invention is to overcome the defects of the related art, and a method, apparatus and system for policy and charging control are provided, which improves the efficiency of service flow interaction.

In order to achieve the above object, the technical solution provided by the present invention is a method for policy and charging control, which comprises:
A) a packet data network gateway summarizes service data according to service type and configures a corresponding service code for the summarized service type;
B) the packet data network gateway acquires a policy and charging control rule according to the service code; and
C) the packet data network gateway installs and carries out the policy and charging control rule on the service data.

In the embodiments of the present invention, step B) comprises:
the packet data network gateway reports the service code to a policy and charging rules function entity to request the policy and charging control rule; and the packet data network gateway receives the policy and charging control rule generated by the policy and charging rules function entity according to the service code.

In the embodiments of the present invention, the service code is sent to the policy and charging rules function entity via a Diameter attribute value pair (AVP) message.

In the embodiments of the present invention, the packet data network gateway locally pre-configures correlation between the service code and the policy and charging control rule; and step B) comprises the packet data network gateway inquiring the correlation to acquire the policy and charging control rule corresponding to the service code.

In the embodiments of the present invention, the summarization of service data in step A) summarizes them to the 3^{rd} and 4^{th} layers of an IP protocol stack of the Internet protocol; or summarizes them to the 7^{th} layer and layers greater than the 7^{th} layer of the IP protocol stack.

A packet data network gateway, comprising:
a summarization encoding unit adapted for summarizing service data according to service type and configuring a corresponding service code for the summarized service type;
an acquisition unit connected to the summarization encoding unit and adapted for acquiring a policy and charging control rule according to the service code; and
an installation and execution unit connected to the acquiring unit and adapted for installing and carrying out the policy and charging control rule on the service data.

In the embodiments of the present invention, the acquisition unit in particular comprises:
a reporting subunit connected to the policy and charging rules function entity and adapted for reporting the service code to a policy and charging rules function entity to request the policy and charging control rule; and
a receiving subunit connected to the policy and charging rules function entity and adapted for receiving the policy and charging control rule generated by the policy and charging rules function entity according to the service code.

In the embodiments of the present invention, the packet data network gateway further comprises: a configuring unit adapted for locally pre-configuring correlation between the service code and the policy and charging control rule; and the acquisition unit comprises: an acquisition subunit connected to the configuring unit and adapted for inquiring the correlation to acquire the policy and charging control rule corresponding to the service code.

In the embodiments of the present invention, the summarization of service data by the summarization encoding unit summarizes them to the 3^{rd} and 4^{th} layers of an IP protocol stack of the Internet protocol; or summarizes them to the 7^{th} layer and layers greater than the 7^{th} layer of the IP protocol stack.

A system for policy and charging control, comprising:
a policy and charging rules function entity adapted for generating a policy and charging control rule; and
a packet data network gateway connected to the policy and charging rules function entity and adapted for summarizing service data according to service type and configuring a corresponding service code for the summarized service type, and then acquiring the policy and charging control rule according to the service code, and installing and carrying out the policy and charging control rule on the service data.

In the embodiments of the present invention, the summarization of service data by the packet data network gateway summarizes them to the 3^{rd} and 4^{th} layers of an IP protocol stack of the Internet protocol; or summarizes them to the 7^{th} layer and layers greater than the 7^{th} layer of the IP protocol stack. Compared to the related art, the technical solution provided by the present invention summarizes service type by a packet data network gateway and allocates a service code, acquires a policy and charging control rule via the service code, and the packet data network gateway installs and carries out PCC after having received the same. It improves the efficiency of the Gx interface interaction service flow compared with the service flow interaction manner recommended by 3 GPP by.

Furthermore, in the embodiments of the present invention, the summarization of service can further be divided to the 7^{th} layer and layers greater than the 7^{th} layer of IP protocol stack, as compared to the related art. It meets the practical requirements of highly efficient interaction service flow.

### Brief Description of the Drawings

Fig. 1 is a schematic diagram of the architecture of an EPS system;
Fig. 2 is a schematic diagram of the architecture of a PCC system;
Fig. 3 is a flow chart of a currently available PCC system interface message;
Fig. 4 is a schematic diagram of a service type summarization provided by the embodiments of the present invention;
Fig. 5 is a flow chart of a method for policy and charging control based on summarizing service type provided by the embodiments of the present invention; and
Fig. 6 is a block diagram of a packet data network gateway provided by the embodiments of the present invention.

### Detailed Description of the Embodiments

Hereinafter, the present invention will be further described in detail by way of particular embodiments and in conjunction with the drawings.

The main concept of the present invention is that: P-GW summarizes service data according to service type and configures a corresponding service code for the summarized service type; the packet data network gateway acquires a policy and charging control rule according to the service code; and the packet data network gateway installs and carries out the policy and charging control rule on the service data.

Referring to Fig. 4, Fig. 4 is a schematic diagram of summarization based on service type provided by the embodiments of the present invention.

In the embodiments of the present invention, the service type summarization of P-GW can be provided based on the level. The relatively rough levels can be summarized into the quintuple level of IP packet, i.e. the 3^{rd} and 4^{th} layers of IP protocol stack. In the embodiments of the present invention, preferably, they are divided to finer level such as the particular uniform resource locator (URL) level of data application and the summarization is into the 7^{th} layer and layers greater than the 7^{th} layer of the IP protocol stack, i.e. IP protocol stack 7/7+ layer. 7^{th} layer and 7+ layer in the IP network refer to various particular application protocol layers based on transfer control protocol (TCP) and user datagram protocol (UDP), such as hypertext transfer protocol (HTTP), real-time transport streaming protocol (RTSP), point-to-point (P2P) technology, etc. The embodiments of the present invention summarizes that an application particularly belongs to which kind of service (such as browsing, P2P, streaming media, etc.) by identifying the URL, keyword, operation code, behavior features, etc. of the 7^{th} layer and 7+ layer application. Corresponding application service numbers (Application ID) are given to the service types divided in each level, and it is recommended to be defined as Diameter AVP so as to interact in the Diameter message at the Gx interface. For instance, the application services are summarized into general classifications such as browsing, P2P, streaming media, etc. And a service code is directly given to these classifications, such as P2P App ID 10 in the figure. These general classifications can be further divided in detail into sub-classifications, and then a service code is further given thereto, such as Browse App IDO and Sub AppID1. In the embodiments of the present invention, the browsing services are generally summarized as a service code Browse App ID 0, and then a PCC rule 0 corresponding to this service code Browse App ID 0 is configured at PCRF side, a particular browsing service 1 is summarized as a service code Sub App ID I, and then a PCC rule 1 corresponding to this service code Sub App ID 1 is configured at PCRF side. The streaming media service is summarized as a service code Video App ID70, and then a PCC rule 70 corresponding to this service code Video App ID70 is configured at PCRF side. And so forth so on. In the embodiments of the present invention, the definition of services by GW is greatly detailed, and compared to the IP service quintuple level recommended by 3GPP, i.e. the 3^{rd} and 4^{th} layers of IP protocol stack, the service type summarization definition provided by the embodiments of the present invention can be divided to the 7/7+ layer of IP service. The service division by the embodiments of the present invention can be dynamically adjusted according to the practical operating condition, and the granularity of service summarization by the operators can be rough or refined, and the policy is quite flexible.

The present method further provides for pre-configuring static PCC rule locally at P-GW in addition to supporting PCRF to send dynamic rule. On one hand, locally pre-configuring static PCC rule can be used as a method for only exchanging the policy ID between PCRF and P-GW so as to improve the message efficiency at the Gx interface; on the other hand, it can further ensure that those policy parameters which are not sent out in the PCC rule can be supplemented to PCRF at P-GW. Although the embodiments of the present invention support providing local static PCC rule at P-GW, it is still recommended that PCRF sufficiently collects the information of each party to dynamically send the PCC rule for service type decision. This flexible manner of providing PCC rule for services has wider application range.

When the service data arrive at P-GW, P-GW obtains the application service number, i.e. particular Application ID, according to the summarization rule. By the Gx interface, it is reported to PCRF, to require the latter to provide PCC rule.

After having received the request of P-GW, PCRF reads the information to learn the service type represented by this application service number, determines the PCC rule corresponding to this service, and then answers P-GW via the Gx interface. After having received the PCC rule, P-GW installs and carries out the same.

Hereinafter, a packet data network gateway reporting service code to a policy and charging rules function entity to request dynamic policy and charging control rule is used as an example for describing the present invention.

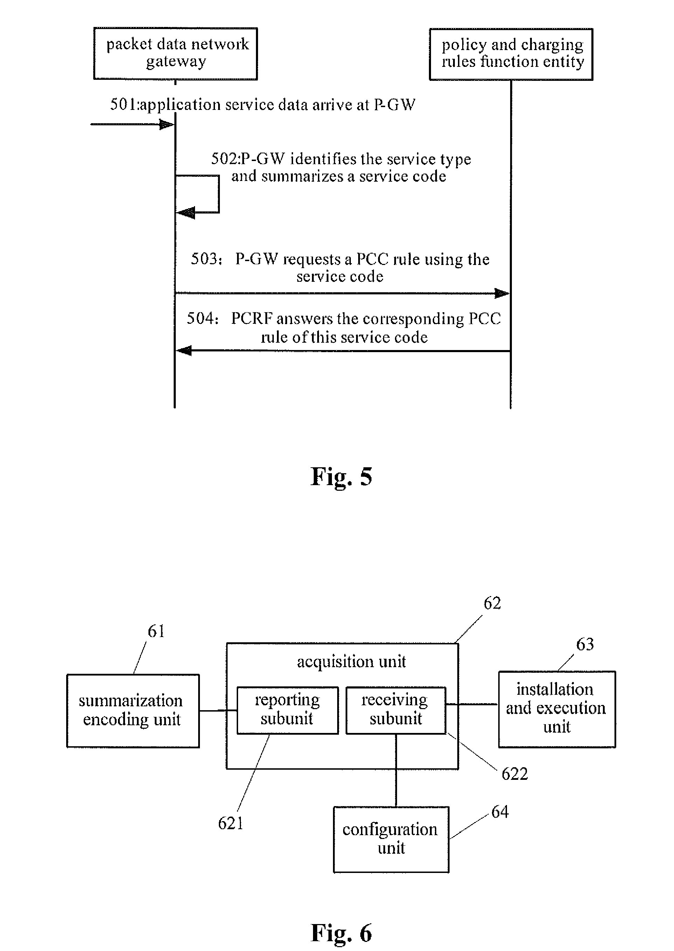

Referring to Fig. 5, Fig. 5 is a flow chart of a method for policy and charging control based on summarizing service type provided by the embodiments of the present invention, which comprises the following steps:
501: an application service packet arrives at P-GW;
502: P-GW identifies the application service type and summarizes a service code Application ID corresponding thereto;
503: P-GW requests a PCC rule from PCRF via the Gx interface using the service code Application ID; and
504: PCRF determines the corresponding PCC rule according to the Application ID and other information and answers it to P-GW, and P-GW installs and carries out the same.

Referring to Fig. 6, Fig. 6 is a block diagram of the principles of a packet data network gateway provided by the embodiments of the present invention, and the packet data network gateway comprises the following units.

A summarization encoding unit **61** adapted for summarizing service data according to service type and configuring a corresponding service code for the summarized service type.

In the embodiments of the present invention, the summarization of service data by the summarization encoding unit can summarize them to the 3^{rd} and 4^{th} layers of an IP protocol stack and can also finely summarize them to a finer level such as the particular URL level of data application, summarize them to the 7^{th} layer and layers greater than the 7^{th} layer of the IP protocol stack, i.e. 7/7+ layer of IP protocol stack.

An acquisition unit **62** connected to the summarization encoding unit **61** and adapted for requesting the policy and charging control rule according to the service code.

An installation and execution unit **63** connected to the acquisition unit **62** and adapted for installing and carrying out the policy and charging control rule on the service data.

Furthermore, the acquisition unit **62** in particular comprises the following.

A reporting subunit **621** connected to the policy and charging rules function entity and adapted for reporting the service code to the policy and charging rules function entity to request the policy and charging control rule.

In the embodiments of the present invention, the reporting unit sends the service code to the policy and charging rules function entity via a Diameter AVP message.

A receiving subunit **622** connected to the policy and charging rules function entity and adapted for receiving the policy and charging control rule generated by the policy and charging rules function entity according to the service code.

In this embodiment, the packet data network gateway further comprises a configuration unit **64** adapted for pre-configuring the local policy and charging control rule; and the acquisition unit **62** comprises an acquisition subunit **622** connected to the configuration unit **64** and adapted for inquiring the correlation to acquiring the policy and charging control rule corresponding to the service code.

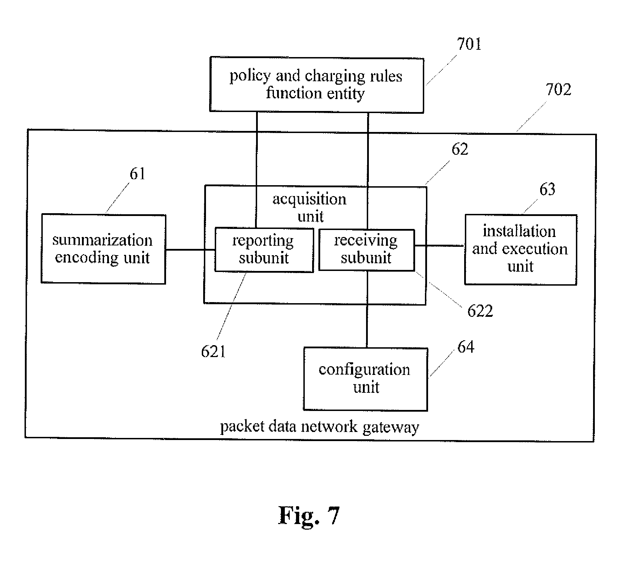

Referring to Fig. 7, the embodiments of the present invention further disclose a system for policy and charging control, comprising:
a policy and charging rules function entity **701** adapted for generating a policy and charging control rule; and
a packet data network gateway **702** connected to the policy and charging rules function entity **701** and adapted for summarizing service data according to service type and configuring a corresponding service code for the summarized service type and then acquiring the policy and charging control rule according to the service code; and installing and carrying out the policy and charging control rule on the service data.

The summarization of service data by the packet data network gateway **702** summarizes them to the 3^{rd} and 4^{th} layers of an IP protocol stack of the Internet protocol; or summarizes them to the 7^{th} layer and layers greater than the 7^{th} layer of the IP protocol stack.

In summary, the embodiments of the present invention employ the method of a packet data network gateway summarizing service type and allocating a service code, acquiring a policy and charging control rule PCC via the service code, and the packet data network gateway installing and carrying out PCC after having received the same. It improves the efficiency of the Gx interface interaction service flow compared with the service flow interaction manner recommended by 3GPP.

Furthermore, in the embodiments of the present invention, the summarization of service can further be divided to the 7^{th} layer and layers greater than the 7^{th} layer of the IP protocol stack. Compared to the related art, it meets the practical requirements of highly efficient interaction service flow.

The foregoing is a detailed description of the present invention in conjunction with particular preferred embodiments, and it should not be interpreted that the particular implementation of the present invention is only limited to these description. As to those skilled in the art of the present invention, several simple deductions or alterations can further be made without departing from the concept of the present invention, all of which should be view as belonging to the protection scope of the present invention.

## Claims

1. A method for police and charging control, **characterized by** comprising:
a packet data network gateway summarizing service data according to service type and configuring a corresponding service code for the summarized service type;
the packet data network gateway acquiring a policy and charging control rule according to the service code; and
the packet data network gateway installing and carrying out the policy and charging control rule on the service data.

2. The method according to Claim 1, **characterized in that** the packet data network gateway acquiring the policy and charging control rule according to the service code comprises:
the packet data network gateway reporting the service code to a policy and charging rules function entity to request the policy and charging control rule; and
the packet data network gateway receiving the policy and charging control rule generated by the policy and charging rules function entity according to the service code.

3. The method according to Claim 2, **characterized in that** the service code is sent to the policy and charging rules function entity via a Diameter message.

4. The method according to Claim 1, **characterized in that** the packet data network gateway locally pre-configures correlation between the service code and the policy and charging control rule locally; and the packet data network gateway acquiring the policy and charging control rule according to the service code comprises:
the packet data network gateway inquiring the correlation to acquire the policy and charging control rule corresponding to the service code.

5. The method according to any one of Claims 1-4, **characterized in that** the packet data network gateway summarizing service data according to service type comprises: summarizing them to the 3^{rd} and 4^{th} layers of an IP protocol stack of the Internet protocol; or summarizing them to the 7^{th} layer and layers greater than the 7^{th} layer of the IP protocol stack.

6. A packet data network gateway, **characterized by** comprising:
a summarization encoding unit adapted for summarizing service data according to service type and configuring a corresponding service code for the summarized service type;
an acquisition unit connected to the summarization encoding unit and adapted for acquiring a policy and charging control rule according to the service code; and
an installation and execution unit connected to the acquiring unit and adapted for installing and carrying out the policy and charging control rule on the service data.

7. The packet data network gateway according to Claim 6, **characterized in that** the acquisition unit comprises:
a reporting subunit adapted for reporting the service code to a policy and charging rules function entity to request the policy and charging control rule; and
a receiving subunit connected to the policy and charging rules function entity and adapted for receiving the policy and charging control rule generated by the policy and charging rules function entity according to the service code.

8. The packet data network gateway according to Claim 6, **characterized by** further comprising a configuring unit adapted for locally pre-configuring correlation between the service code and the policy and charging control rule;
and the acquisition unit comprises:
an acquisition subunit connected to the configuring unit and adapted for inquiring the correlation to acquiring the policy and charging control rule corresponding to the service code.

9. The packet data network gateway according to any one of Claims 6-8, **characterized in that** the summarization of service data by the summarization encoding unit summarizes them to the 3^{rd} and 4^{th} layers of an IP protocol stack of the Internet protocol; or summarizes them to the 7^{th} layer and layers greater than the 7^{th} layer of the IP protocol stack.

10. A system for policy and charging control, **characterized by** comprising:
a policy and charging rules function entity adapted for generating a policy and charging control rule; and
a packet data network gateway connected to the policy and charging rules function entity and adapted for summarizing service data according to service type and configuring a corresponding service code for the summarized service type, and then acquiring the policy and charging control rule according to the service code, and installing and carrying out the policy and charging control rule on the service data.

11. The policy and charging control according to Claim 10, **characterized in that** the summarization of service data by the packet data network gateway summarizes them to the 3^{rd} and 4^{th} layers of an IP protocol stack of the Internet protocol; or summarizes them to the 7^{th} layer and layers greater than the 7^{th} layer of the IP protocol stack.
